# EUROPEAN PATENT SPECIFICATION

(11) **EP 3 509 016 B1**
(45) Date of publication and mention of the grant of the patent: **18.08.2021**
(21) Application number: 17847086.0
(22) Date of filing: 12.05.2017
(51) Int. Cl.: G06K 19/077, G06K 19/067, G06K 19/07

(54) **SMART CARD IN WHICH DETACHABLE FRAGMENTS CAN BE USED AS INDEPENDENT RFID IDENTIFIERS**
CHIPKARTE, AUF DER ABNEHMBARE FRAGMENTE ALS UNABHÄNGIGE RFID-IDENTIFIKATOREN VERWENDET WERDEN KÖNNEN
CARTE DE STOCKAGE DE DONNÉES DOTÉE D'UNE POSSIBILITÉ DES FRAGMENTES SÉPARABLES EN TANT QUE IDENTIFIANTS RFID INDÉPENDANTS

(30) Priority: 02.09.2016 RU 2016135575
(43) Date of publication of application: 10.07.2019
(73) Proprietor: Novakovskijj, Ehduard Gennad'evich, 141400 g. Khimki - Moskovskaja obl. (RU)
(72) Inventor: Novakovskijj, Ehduard Gennad'evich, 141400 g. Khimki - Moskovskaja obl. (RU)
(74) Representative: Feltrinelli, Secondo Andrea
(86) International application number: PCT/RU2017/000306
(87) International publication number: WO 2018/044204

(56) References cited:
- FR-A1- 2 887 712
- JP-A- 2002 230 499
- RU-C1- 2 470 370
- RU-C2- 2 394 272
- RU-U1- 92 558
- RU-U1- 92 558
- US-A1- 2005 275 540
- US-A1- 2007 152 822
- US-A1- 2011 215 909
- US-B1- 6 774 865

## Description

### SUMMARY OF THE INVENTION

The invention relates to a design for a contactless smart card.

Contactless identification smart cards are configured with a radio frequency identification tag (RFID tag), integrated into the card, i.e. an antenna, and an electronic module, i.e. an integral microcircuit (a chip) coupled to the antenna. Such cards enable exchanging data via contactless electromagnetic communication between the card's antenna and an antenna disposed in a readout device. Contactless smart cards are commonly used as a payment instrument to access a transport network and as personnel identification facilities.

One known invention patent RU2251742 (published 10.05.2005) describes a contactless or a combined contact/contactless chip card comprising: a substrate-supported antenna, the antenna comprising at least one loop screen printed on the substrate with an electrically conductive ink, two card bodies at each side of the substrate, each body comprised of at least one plastic layer, and one microchip or one module coupled to the antenna, wherein the substrate is made from paper and includes cutouts in each corner, at the level of which the two bodies of the card are soldered to each other, the card, when bended, becoming able to delaminate at the bending force impact area, thus enabling subsequent detection of willful damage, since the bending signs remain on the card.

The closest analog is a contactless smart card (Patent RU92558U, published 20. 03.2010), configured as a substrate with an antenna disposed thereon and comprising multiple loops and two layers of the card at each side of the substrate, and one microchip or one module coupled to the antenna, wherein the antenna further comprises a current-conducting connection to make contact between some of the antenna loops, the current-conducting connection being disposed at a detachable region of the smart card.

US2011215909A1 describes a structure including at least two ICs devices with contactless communication.

US2007152822A1 concerns to monitoring devices for determining whether a package has been opened using RFID devices.

JP2002230499A relates to an IC tag for communicating data in a contactless manner. The known approaches are aimed at protecting a contactless smart card against unauthorized use. Their functional capabilities are limited to acting as a card's microchip only.

The objective of the invention is to enhance the card's functional capabilities.

The technical result of the invention are enhanced functional capabilities of a contactless smart card in which additional RFID tags are activated when and as desired by the user. Further, the card may be used as a payment instrument in which any possibility of multiple writing the money off in the event of accidental multiple presenting the card to a reader or a turnstile validator is prevented. Still further, the card may be used for covert alerting with an optional possibility of identifying the person who has given the alert.

Said technical result is achieved via a first embodiment in which there is claimed a contactless identification smart card, comprising: a primary RFID tag in an active state, disposed inside the smart card having at least one line for separating the card into fragments, an additional RFID tag having at least one shunt circuit in the form of an electrical conductor contactingly connected to an antenna of the additional RFID tag or being contactingly connected to the terminals of an integral microcircuit of the additional RFID tag, the regions of said shunt circuit passing through two adjacent fragments of the card and being structurally connected to the card so that when the card is in an ordinary, whole, state this shunt circuit is in a state of working contact, and when said adjacent fragments are in a separated state, the shunt circuit is in a state of broken contact, wherein when the shunt circuit of the additional RFID tag is in a state of working contact, the additional RFID tag is in an inactive state, and when said shunt circuit is in a state of broken contact, the additional RFID tag is in an active state as an additional RFID tag. Advantageously, in one of its parts, separated by the line for separating the card into fragments, the card includes an active primary RFID tag, and in the other part the card includes an additional RFID tag. Advantageously, the active primary RFID tag and the additional RFID tag are located in different fragments of the card.

Advantageously, the smart card has at least one fragment not comprising any RFID tags and it is the fragment through which passes a region of the shunt circuit of the additional RFID tag, or regions of both shunt circuits.

Advantageously, the primary RFID tag and the additional RFID tag are located within one of the card's fragments.

In the second embodiment, there is claimed a contactless identification smart card according to the first embodiment, comprising: lines for separating the card into fragments, and at least two additional RFID tags. Advantageously, one fragment of the card includes an active primary RFID tag and does not include any additional RFID tags.

Advantageously, the smart card has at least one fragment not comprising any RFID tags, through which passes a region of one shunt circuit or regions of several shunt circuits from among the shunt circuits of the additional RFID tags.

Advantageously, the primary RFID tag and one of the additional RFID tags are located within one of the card's fragments.

The two embodiments have in common the following capabilities:
- the antenna of an active primary RFID tag passes through two adjacent fragments of the card so that in the ordinary, whole, state the antenna is in a state of working contact, and, when said adjacent fragments are separated, the antenna is in a state of broken contact, the antenna's characteristics being changed to an extent that the primary RFID tag, when within the range of an active RFID reader, does not generate a return radio signal with a power as necessary for the reader to receive it, and the primary RFID tag comes out of action;
- the primary RFID tag has a minimum of one shunt circuit in the form of an electrical conductor or a current-conducting connection comprising at least one electrical conductor, contactingly connected to the deactivating terminals of the primary RFID tag's integral microcircuit, the regions of said shunt circuit passing through two adjacent fragments of the card and being structurally connected to the card so that when the card is in an ordinary, whole, state this shunt circuit is in a state of working contact, and when said adjacent fragments are in a separated state, the shunt circuit is in a state of broken contact, the primary RFID tag being configured in an active state when the primary RFID tag's shunt circuit is in a state of working contact, and is in an inactive state when said shunt circuit is in a state of broken contact;

- the lines for separating the card into fragments are configured as the card cracking or fracture, or tear, or cut, or score, or perforation, or thickness variation, lines, or materials interface lines, or structural materials interface lines, or internal cavities, or boundary lines between contacting layers, the card's structure allowing separation of its fragments along the fixed line with an acceptable precision;
- at least one fragment of the card is configured with one or more structural components protruding towards an adjacent fragment and surrounding at least one of the electrical conductors of the primary and additional RFID tags' shunt circuits, or inseparably coupled to said conductor and designed for breaking the conductor responsive to separation of the fragments, the electrical conductor's regions passing through two adjacent fragments of the card along the line for separating the card into fragments;
- the card's fragments are configured as the card's layers coupled to each other such that the fragments may be separated layer by layer, one or more electrical conductors of the primary and additional RFID tags' shunt circuits having regions configured in two or more layers of the card.

### Brief description of the drawings

Fig. 1 schematically shows a prophetic example of such contactless smart card according to a first embodiment, comprising an additional RFID tag that comprises at least one closing or shunt conductor.
Fig. 2 schematically shows an example in which in one part of the card, detachable by the line for separating the card into fragments, the smart card comprises an active primary RFID tag, and in the other part the card includes an additional RFID tag.
Fig. 3 shows an example where the closing or shunt conductor passes through the card fragment not comprising any RFID tags.
Fig. 4 shows an example embodiment of a smart card comprised of two layers configured for layer by layers separation of the fragments.
Fig. 5 shows an example embodiment of the line for separating the card into fragments in the form of a broken curve.
Fig. 6 shows an example embodiment of a card where a fragment of the card is configured with a structural component extending through an adjacent fragment and designed for breaking the conductor responsive to separation of the fragments.
Fig. 7 shows an example embodiment of a card where the antenna of an active primary RFID tag passes through two fragments of the card such that in the ordinary, whole, state the antenna is in a state of working contact, and in a state where the fragment with the primary RFID tag is separated, the RFID tag comes out of action
Fig. 8 schematically shows a prophetic example of a contactless smart card according to a second embodiment.

In the drawings: 1 is the primary substrate, 2 is the RFID tag antenna disposed on the substrate; 3 is the card's primary fragment; 4 is the microchip; 5 is the shunt circuit (herein in the form of a closing conductor); 6 is the detachable fragment of the smart card; 7 is the line for separating the smart card into fragments, 8 is the additional RFID tag, 9 is the line for detaching the smart card's fragment not comprising any RFID tags, 10 is the smart card's fragment not comprising any RFID tags, 11 is an additional substrate (detachable layer) of the smart card.

### Detailed description of embodiments

A contactless smart card may be configured as a substrate with a RFID tag (an antenna and a microchip coupled thereto) or more than one RFID tags disposed on the substrate.

The card is made from a homogeneous laminate material or a composite material, plastic, paper (cardboard) or any other material meeting the existing standards and may be comprised of layers of various or homogeneous materials. The card, while structurally integral under normal operation conditions, may be separated into two or more parts. The card is separated into parts by mechanically detaching the card's fragments, such as by breaking off, tearing off, cutting, delaminating one or more layers of the card, etc., the card structure enabling separation of its fragments along a fixed line with a precision sufficient to achieve the claimed result. To facilitate separation of the card fragments along the fixed separation line, grooves, perforations, notches, card thickness variations, layer boundaries, materials interfaces, structural components' boundaries, internal cavities, or other material stress concentrators may be provided along the fragments. Where a card (preferably made from cardboard or soft plastic) is separable into fragments by cutting, the separation line may be marked on the card body. The fragment separation sequence, detachable fragment layout, and location of the line for separating the card may be advised to the user through directions on the use of the card without any marking to this end on the card.

The card accommodates a primary RFID tag in an active state with the primary identification code and one or more additional RFID tags in an inactive state with additional identification codes distinct from the primary identification code. The primary RFID tag in an active state, when within the range of an active RFID reader, generates a return radio signal with the primary identification code within an operating band with a power sufficient for the reader to receive it, while an additional RFID tag in an inactive state, when within the range of the reader, does not generate any return signal with an additional identification code within an operating band with a power sufficient for the reader to receive it.

The additional RFID tags have a shunt circuit to close or shunt any or all antenna loops, certain parts of the electrical conductor or current-conducting connection being located at a detachable area of the smart card. Alternatively, the shunt circuit terminals are connected to the additional RFID tag's chip deactivating terminals, the additional RFID tag's integral circuit terminals which, when in the closed state according to the circuit layout, deactivate the additional RFID tag signal generation function, being used as the deactivating terminals. The shunt circuit, that may be contactingly connected to the additional RFID tag antenna loops or to the additional RFID tag chip's deactivating terminals, is configured as an electrical conductor, or an electrical conductor is included into the additional RFID tag shunt circuit such that, when the conductor is in a state of broken contact, the additional RFID tag shunt circuit of the is in a state of broken contact. The conductor or the current-conducting connection is configured such that, by detaching the respective fragment of the card, the connection is broken, and the shunt circuit comes into a state of broken contact. The smart card detachable fragment with a current-conducting connection may be configured in any part of the card, for example, in the end or central part of the smart card.

By breaking the current-conducting connection, that short circuits or shunts any or all antenna loops or deactivates, via special terminals, the chip of the additional RFID tag previously being inactive, the card's RFID tag, previously unreadable within an operating band, becomes an activated RFID tag with an additional identification code, which may be read by a suitable reader at an operating frequency. This approach enables using the detachable fragment with the additional RFID tag as an activatable RFID identifier with an additional identification code.

In one design embodiment, where the smart card's primary RFID tag is not deactivated by separating the card's fragments, the primary RFID tag may be located within the same fragment with an additional RFID, the primary and the additional RFID tags using distinct encoding schemes for data transmitting or distinct operating bands. Such embodiment enables using the detachable fragment with the additional RFID tag as an activatable RFID identifier with an additional identification code, where the card is used in automated identification systems of multi-mode RFID readers capable of reading and processing various types of RFID tags with distinct encoding schemes, distinct operating bands, the primary RFID tag remaining active, and, in addition to the additional tag's code, the system may also register the primary tag's code. For the systems, where the readers' technical characteristics do not enable them to distinguish the codes of two simultaneously active tags, i.e. the primary and the additional ones, it is advantageous to use a card design with a deactivatible primary radio frequency tag. The active primary RFID tag antenna passes through two adjacent fragments of the card so that in the ordinary, whole, state the antenna is in a state of working contact, and, when said adjacent fragments are separated, the antenna is in a state of broken contact, the antenna's characteristics being changed to an extent that the primary RFID tag, when within the range of an active RFID reader, does not generate a return radio signal with a power as necessary for the reader to receive it, and the primary RFID tag comes out of action. The primary tag is deactivated responsive to separation of the fragment comprising the primary RFID tag and breaking the primary RFID tag antenna circuit or breaking the shunt circuit that closes or shunts the deactivating terminals of the primary RFID tag chip (the terminals used for deactivation are the primary RFID tag integral circuit terminals which, when in the closed state, activate the primary RFID tag signal generation function in accordance with the integral circuit layout, and deactivate the primary RFID tag signal generation function, when the primary RFID tag shunt circuit is in a state of broken contact).

The shunt circuit to be contactingly connected to the primary RFID tag chip's deactivating terminals may be configured as an electrical conductor, or an electrical conductor may be included in the primary RFID tag's shunt circuit such that, when the conductor is in a state of broken contact, the primary RFID tag's shunt circuit is in a state of broken contact. The current-conducting connection is broken mechanically, i.e. the new functions of the smart card are activated mechanically.

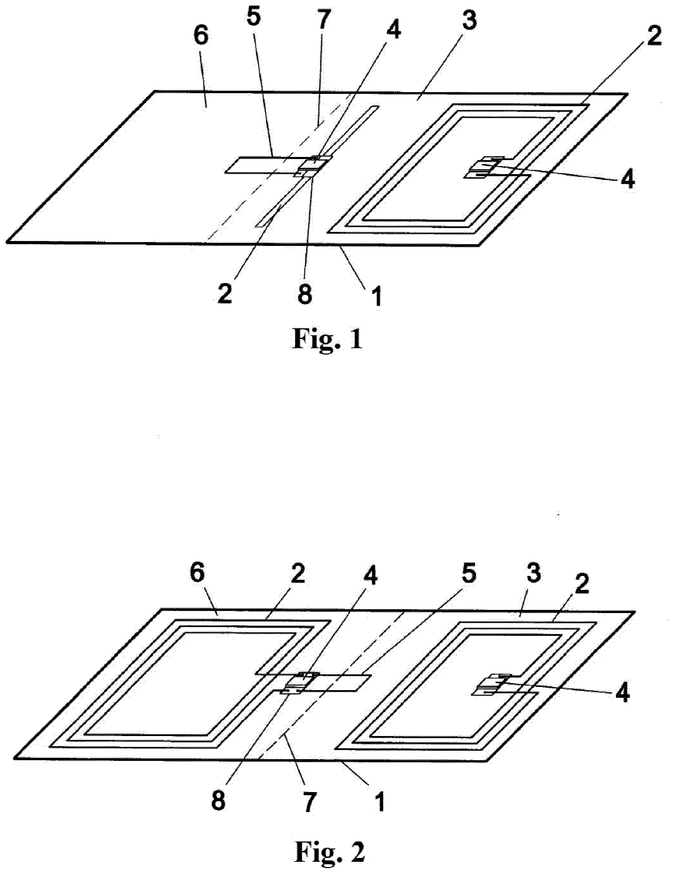

In the first embodiment, the claimed approach (ref. to Fig. 1) is based on that the smart card has lines for separating the card into fragments (a primary part 3, comprising the primary and the additional RFID tags, a detachable part 6 of the card) and comprises substrate 1 supporting additional RFID tag 8 with a chip 4 and an antenna 2 having at least one shunt circuit comprised of a closing conductor 5. The conductor 5 is an electrical conductor contactingly connected to the antenna 2 of the additional RFID tag 8 or connected to the terminals of an integral microcircuit of the additional RFID tag 8, structurally coupled to the card on the substrate 1. Certain regions of the conductor 5 extend through two adjacent fragments 3 and 6 of the card, such that in the ordinary, whole, state the conductor 5 is in a state of working contact, and, when the fragment 6 is separated, the conductor is in a state of broken contact. Therein, the additional RFID tag 8 is in an inactive state, when the closing or shunt conductor 5 is in a state of working contact, and is in an active state, when the conductor is in a state of broken contact.

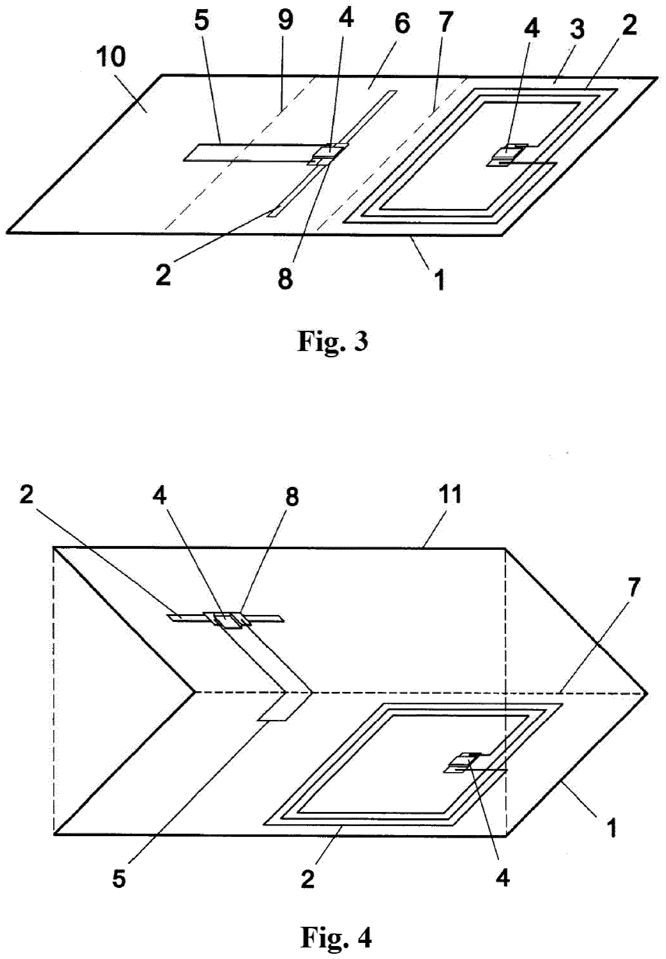

The device may be configured such (ref. to Fig. 2, Fig. 3) that one part of the card, detachable by the line 7 for separating the card into fragments 3 and 6, comprises an active primary RFID tag, and the other part the card includes an additional RFID tag 8. It may be implemented by two methods. In the first case, an embodiment may be used where a shunt circuit, COMPRISED OF the closing conductor 5, passes through a third fragment 10 of the card (Fig. 3), which has its individual line 9 for separating it from the fragment 6 of the card. Herein, if the separation line 7 is not provided on the card, than, in one part surrounding the fragments 3 and 6, the card comprises an active primary RFID tag and an additional RFID tag 8, with a portion of the shunt conductor 5 passing through the other part 10 of the card.

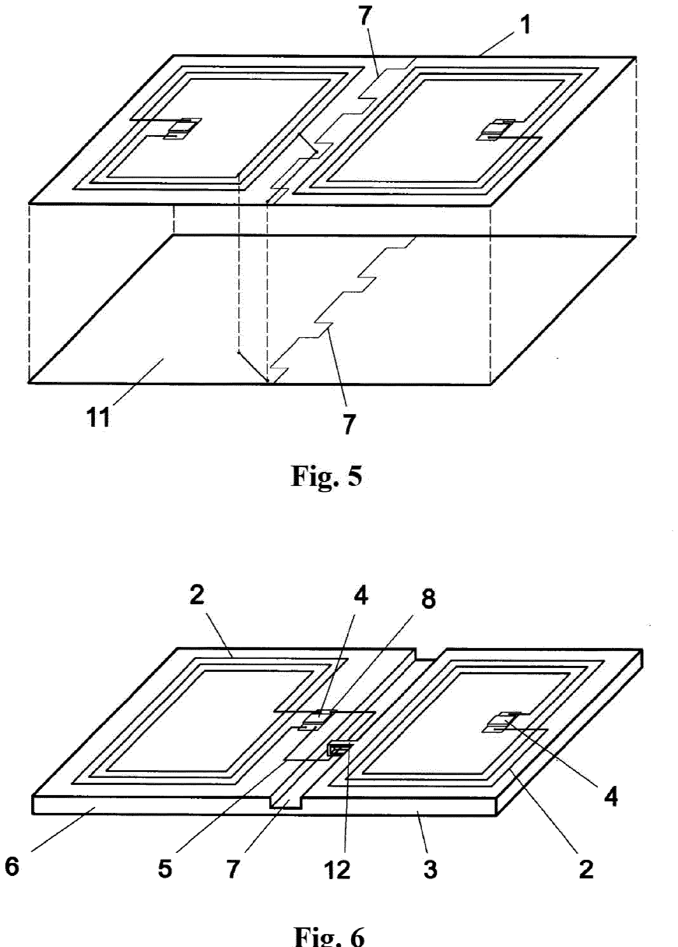

The second method (ref. to Fig. 4, Fig. 5) provides for configuring the regions of the electrical conductor 5 in two layers of the card (on the primary substrate 1 and the additional substrate 11) coupled to each other. Herein, disconnection of the conductor 5 and unlocking the additional RFID tag 8 may be provided by the line for separating the card into fragments passing along the boundary of layers' contact plane (around the card perimeter) and located between the two coupled layers 1 and 11.

Technically, the regions of the electrical conductor 5 may pass through the card's adjacent fragments through the line 7 for separating the card into fragments, if it is configured, for example, in the form of a broken curve (ref. to Fig. 5), or along the line 7 for separating the card into fragments (ref. to Fig. 6), for example, if at least one fragment (herein, the fragment 3) is configured with one or more structural components 12 protruding towards the adjacent fragment 6 surrounding the shunt circuit conductor 5 passing along the line 7 for separating into fragments, or inseparably coupled to said conductor. The conductor 5 (ref. to Fig. 6) from a contact with one of the terminals of the antenna 2 of the additional RFID tag 8 passes onto the fragment 6, than along the separation line 7, than through the component 12 of the fragment 3, than again along the separation line 7, and over the fragment 6 is led to a second terminal of the antenna 2 of the additional RFID tag. In response to the fragment separation, the structural component 12 breaks the shunt circuit conductor 5, thus activating the additional RFID tag 8. The lines 7 and 9 for separating the card into fragments may be configured by any method, for example: cracking or fracture, or tear, or score, or cut, or perforation, or card thickness variation, lines, or materials interface lines, or structural materials interface lines, or internal cavities, or boundary lines between contacting layers. The separation line location on the card may not be marked, in which case their location, as well as the location of the detachable fragments and the sequence for separating the fragments may be advised to the user through directions on the use of the card.

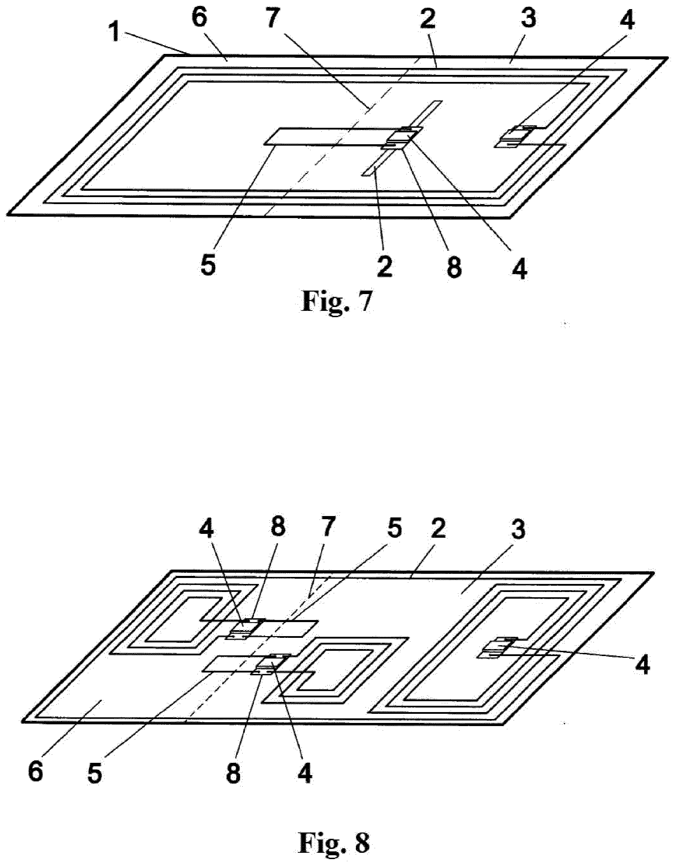

The active primary RFID tag antenna 2 may (ref. to Fig. 7) also pass through the two fragments 3 and 6 of the card such that, in the ordinary, whole, state the antenna 2 is in a state of working contact, and, in a state where the fragment with the primary RFID tag is separated from the card along the separation line 7, said RFID tag comes out of action at the operating frequency. Herein, the additional RFID tag 8, to the contrary, becomes activated. Such configuration of the smart card allows, in response to separating it into fragments, to deactivate the primary RFID tag and to activate the additional RFID tag 8.

The second embodiment (ref. to Fig. 8) of the approach is based on that the smart card comprises, in addition to an active primary RFID tag, at least two additional RFID tags 8, each having a minimum of one shunt circuit in the form of an electrical conductor or a current-conducting connection comprising at least one electrical conductor, such that, when the conductor is in a state of broken contact, the shunt circuit is in a state of broken contact. The electrical conductor 5 is contactingly connected to the antenna 2 of the respective additional RFID tag 8, or connected to the terminals of the integral microcircuit 4 of the respective additional RFID tag 8. Certain regions of the electrical conductors 5 pass through two adjacent fragments 3 and 6 such that in the ordinary, whole, state the conductors 5 are in a state of working contact, and, in the state with a fragment separated along the separation line 7, the conductors are in a state of broken contact. Therein, one fragment of the card, detachable by the line 7 for separating the card into fragments, may comprise the active primary RFID tag and one of the additional RFID tags 8. Each of the additional RFID tags 8 is in a state of working contact, when the respective closing or shunt conductor 5 is in an inactive state, and, when the conductor 5 is in an active state, is in a state of broken contact as an additional RFID tag 8.

Therein, the primary RFID tag, to the contrary, comes into an inactive state, since its antenna 2 or some of the antenna loops pass through the separation line 7 of the card onto the fragments or along said line (ref. to Fig. 6). When said adjacent fragments are in the separated state, the antenna is in a state of broken contact, the antenna's characteristics being changed to an extent that the primary RFID tag, when within the range of an active RFID reader, does not generate a return radio signal with a power as necessary for the reader to receive it, and the primary RFID tag comes out of action. In other words, the antenna 2 of an active primary RFID tag passes through two fragments of the card such that in the ordinary, whole, state the antenna is in a state of working contact, and, when the card is cracked, this RFID tag comes out of action. The active primary RFID tag antenna 2 may also have alternative layouts, where the antenna has a complex configuration extending onto a second additional layer of the substrate 11, or the primary RFID tag shunt circuit has a complex configuration extending onto a second additional layer of the substrate 11, the primary radio frequency tag is deactivated not in response to the antenna breaking, but in response to breaking the circuit that shunts the deactivating terminals of the primary RFID tag chip (the primary RFID tag shunt circuit terminals which, when the primary RFID tag shunt circuit is in a state of broken contact, deactivate, in accordance with the circuit layout, the function of the primary RFID tag code signal generation, are used as the deactivating terminals). Alternatively, the additional RFID tag shunt circuits' regions may be configured in two layers of the card coupled to each other similar to those shown in Fig. 4, Fig. 5. The examples as described above and other methods (not shown in the drawings) may have many alternative embodiments through which the technical result of the claimed approach may be achieved. In one example embodiment, one of the card fragments detachable by the line for separating the card into fragments may comprise an active primary RFID tag, while not comprising any additional RFID tags. In the second and the first embodiments, the electrical conductor regions may pass through the adjacent fragments of the card along the lines for separating the card into fragments, if, for example, one fragment of the card is configured with one or more structural components protruding towards the adjacent fragment and surrounding the shunt circuit conductor passing along the line for separating the fragments or inseparably coupled to said conductor, and, in response to the fragment separation, such structural components break the shunt circuit conductor.

The technical result of activating a contactless smart card's enhanced functional capabilities when and as desired by the user is achieved by the above embodiments of the technical approach providing for the smart card operation in such mode that, responsive to the card separation into fragments, the primary RFID tag is deactivated, and one or more additional RFID tags are activated, or, responsive to separating the card's fragments with the active primary RFID tag, one or more previously inactive additional RFID tags are activated. Said conditions technically allow for the provision of several functions within a single smart card:
- a primary function and an additional function which is activated under a certain circumstance by the user (for example, in an emergency, alarm situation or in the event of fire);
- a primary function and two or more additional functions which are activated under a certain circumstance by the user (for example, in an emergency, in the event of a terrorist threat, alarm situation or in the event of fire), the primary function being lost irrecoverably.

Further, the smart card may be used as a payment instrument in the transport industry, museums, and movie theaters, where the use of the claimed approach prevents the possibility of multiple writing the money off in the event of accidental multiple presenting a ticket (the card) based on the claimed approach to a reader, a turnstile validator, etc.

For example, where each passage through a turnstile is activated in response to each cracking of the card's fragment and actuation of the respective additional RFID tag, each of the additional RFID tags providing 1 passage, the user may see directly on the card the number of his/her passages, and any possibility of accidental usage is prevented.

The smart card may also be used for covert alerting. In the event of a terrorist threat, robbery, or gangster attack, access to an alarm button may be restricted or prevented, while the smart card may be accessed by the user at any time. By cracking the smart card, the alarm mode may be actuated, if a RFID reader covers the entire room or location where an employee of the assaulted organization is located; furthermore, there is more likely opportunity for him/her to present a fragment of the card to the nearest reader, than to call a security team by telephone.

## Claims

1. A contactless identification smart card, comprising: a primary RFID tag in an active state, disposed inside the smart card having at least one line (7) for separating the card into fragments, an additional RFID tag (8) having at least one shunt circuit (5) in the form of an electrical conductor, contactingly connected to an antenna (2) of the additional RFID tag or contactingly connected to the terminals of an integral microcircuit (4) of the additional RFID tag, and regions of said shunt circuit passing through two adjacent fragments (3,6,10,11) of the card and being structurally connected to the card so that
when the card is in an ordinary, whole, state this shunt circuit is in a state of working contact, and when said adjacent fragments are in a separated state, the shunt circuit is in a state of broken contact, wherein when the shunt circuit of the additional RFID tag is in a state of working contact, the additional RFID tag is in an inactive state, and when said shunt circuit is in a state of broken contact, the additional RFID tag is in an active state as an additional RFID tag.

2. The contactless smart card of Claim 1, wherein the antenna of a primary RFID tag in an active state tag passes through two adjacent fragments of the card so that in the ordinary, whole, state the antenna of the primary RFID tag is in a state of working contact, and, when said adjacent fragments are separated, the antenna of the primary RFID tag is in a state of broken contact, during which the primary RFID tag, when within the range of an active RFID reader, does not generate a return radio signal with a power as necessary for the reader to receive it, and the primary RFID tag comes out of action.

3. The contactless smart card of Claim 1, wherein the primary RFID tag has a minimum of one shunt circuit in the form of an electrical conductor or a current-conducting connection comprising at least one electrical conductor, contactingly connected to the deactivating terminals of the primary RFID tag's integral microcircuit, and regions of said shunt circuit passing through two adjacent fragments of the card and being structurally connected to the card so that when the card is in an ordinary, whole, state this shunt circuit is in a state of working contact, and when said adjacent fragments are in a separated state, the shunt circuit is in a state of broken contact, the primary RFID tag being configured in an active state when the primary RFID tag's shunt circuit is in a state of working contact, and is in an inactive state when said shunt circuit is in a state of broken contact.

4. The contactless smart card of Claim 1 wherein the active primary RFID tag and the additional RFID tag are located in different fragments of the card.

5. The contactless smart card of Claim 1, wherein it has at least one fragment not comprising any RFID tags and it is the fragment through which passes a region of the shunt circuit of the additional RFID tag, or regions of both shunt circuits.

6. The contactless smart card of Claim 1, wherein the primary RFID tag and the additional RFID tag are located within one of the card's fragments.

7. The contactless smart card of Claim 1, wherein the at least one line for separating the card into fragments is configured as the card cracking or fracture, or tear, or cut, or score, or perforation, or thickness variation, lines, or materials interface lines, or structural materials interface lines, or internal cavities, or boundary lines between contacting layers, the card's structure allowing separation of its fragments along the fixed line with an acceptable precision.

8. The contactless smart card of Claim 1, wherein at least one fragment of the card is configured with one or more structural components protruding towards an adjacent fragment and surrounding at least one electrical conductor of the additional RFID tag's shunt circuit, or inseparably coupled to said conductor and designed for breaking the conductor responsive to separation of the fragments, the electrical conductor's regions passing through two adjacent fragments of the card along the line for separating the card into fragments;

9. The contactless smart card of Claim 1, wherein the card's fragments are configured as the card's layers coupled to each other such that the fragments may be separated layer by layer, at least one electrical conductor of the additional RFID tag's shunt circuit having regions configured in two or more layers of the card.

10. The contactless identification smart card of Claim 1, comprising: lines for separating the card into fragments, and at least two additional RFID tags.

11. The contactless smart card of Claim 10, wherein the antenna of the primary RFID tag passes through two adjacent fragments of the card so that in the ordinary, whole, state the antenna is in a state of working contact, and, when said adjacent fragments are separated, the antenna is in a state of broken contact, during which the primary RFID tag, when within the range of an active RFID reader, does not generate a return radio signal with a power as necessary for the reader to receive it, and the primary RFID tag comes out of action.

12. The contactless smart card of Claim 10, wherein the primary RFID tag has a minimum of one shunt circuit in the form of an electrical conductor, contactingly connected to the deactivating terminals of the primary RFID tag's integral microcircuit, and regions of said shunt circuit passing through two adjacent fragments of the card and being structurally connected to the card so that when the card is in an ordinary, whole, state this shunt circuit is in a state of working contact, and when said adjacent fragments are in a separated state, the shunt circuit is in a state of broken contact, the primary RFID tag being configured in an active state when the primary RFID tag's shunt circuit is in a state of working contact, and is in an inactive state when said shunt circuit is in a state of broken contact.

13. The contactless smart card of Claim 10, wherein one fragment of the card includes the primary RFID tag and does not include any additional RFID tags.

14. The contactless smart card of Claim 10, wherein it has at least one fragment not comprising any RFID tags, through which passes a region of one shunt circuit or regions of several shunt circuits from among the shunt circuits of the additional RFID tags.

15. The contactless smart card of Claim 10, wherein the primary RFID tag and one of the additional RFID tags are located within one of the card's fragments.

16. The contactless smart card of Claim 10, wherein the lines for separating the card into fragments are configured as the card cracking or fracture, or tear, or cut, or score, or perforation, or thickness variation, lines, or materials interface lines, or structural materials interface lines, or internal cavities, or boundary lines between contacting layers, the card's structure allowing separation of its fragments along the fixed line with an acceptable precision.

17. The contactless smart card of Claim 10, wherein at least one fragment of the card is configured with one or more structural components protruding towards an adjacent fragment and surrounding at least one of the electrical conductors of additional RFID tags' shunt circuits, or inseparably coupled to said conductor, and designed for breaking the conductor responsive to separation of the fragments, the electrical conductor's regions passing through two adjacent fragments of the card along the line for separating the card into fragments;

18. The contactless smart card of Claim 10, wherein the card's fragments are configured as the card's layers coupled to each other such that the fragments may be separated layer by layer, one or more electrical conductors of the primary and additional RFID tags' shunt circuits having regions configured in two or more layers of the card.

## Patentansprüche

1. Kontaktlose Identifikations-Chipkarte, umfassend: einen primären RFID-Tag in einem aktiven Zustand, der innerhalb der Chipkarte angeordnet ist und mit mindestens eine Linie (7) zum Trennen der Karte in Fragmente, einen zusätzlichen RFID-Tag (8) mit mindestens eine Bypass-Schaltung (5) in Form eines elektrischen Leiters, die mit einer Antenne (2) des zusätzlichen RFID-Tags kontaktierend verbunden ist oder mit den Anschlüssen einer integrierten Mikroschaltkreis (4) des zusätzlichen RFID-Tags kontaktierend verbunden ist, und Bereiche dieses Bypass-Schaltung, der durch zwei benachbarte Fragmente (3,6,10,11) der Karte verläuft und strukturell mit der Karte verbunden ist, so dass, wenn die Karte in einem normalen, ungeteilte Zustand ist, diese Bypass-Schaltung im Zustand des funktionsfähigen Kontakts ist, und im geteilten Zustand dieser benachbarten Kartenfragmente diese Bypass-Schaltung im Zustand des unterbrochenen Kontakts ist, wobei, wenn der Bypass-Schaltung des zusätzlichen RFID-Tags im Zustand des funktionsfähigen Kontakts ist, das zusätzliche RFID-Tag in einem inaktiven Zustand ist, und wenn diese Bypass-Schaltung im Zustand des unterbrochenen Kontakts ist, der zusätzliche RFID-Tag als zusätzlicher RFID-Tag im aktiven Zustand ist.

2. Kontaktlose Chipkarte nach Anspruch 1, wobei die Antenne eines primären RFID-Tags in einem aktiven Tag durch zwei benachbarte Fragmente der Karte hindurchgeht, so dass sich die Antenne des primären RFID-Tags im normalen, ungeteilte Zustand des funktionsfähigen Kontakts ist, und, wenn die benachbarten Fragmente geteilt sind, die Antenne des primären RFID-Tags im Zustand des unterbrochenen Kontakts ist, währenddessen der primäre RFID-Tag, wenn er sich in Reichweite eines aktiven RFID-Lesegeräts befindet, kein Signal erzeugt das Funksignal mit einer Leistung zurückgeben, die für den Leser erforderlich ist, um es zu empfangen, und das primäre RFID-Tag wird außer Betrieb gesetzt.

3. Kontaktlose Chipkarte nach Anspruch 1, **dadurch gekennzeichnet, dass** das primäre RFID-Tag mindestens einen Bypass-Schaltung in Form eines elektrischen Leiters oder einer stromführenden Verbindung mit mindestens einem elektrischen Leiter aufweist, die mit den Deaktivierungspins der integrierte Schaltung des primären RFID-Tags und Bereiche des Bypass-Schaltung, die durch zwei benachbarte Fragmente der Karte verlaufen und strukturell mit der Karte verbunden sind, so dass, wenn die Karte in einem normalen, ungeteilte Zustand ist, diese Bypass-Schaltung im Zustand des funktionsfähigen Kontakts ist, und im geteilten Zustand dieser benachbarten Kartenfragmente diese Bypass-Schaltung im Zustand des unterbrochenen Kontakts ist, wobei das primäre RFID-Tag aktiv ist, wenn die Bypass-Schaltung des primären RFID-Tags im Zustand des funktionsfähigen Kontakts ist, und inaktiv ist, wenn diese Bypass-Schaltung im Zustand des unterbrochenen Kontakts ist.

4. Kontaktlose Chipkarte nach Anspruch 1, wobei sich das aktive primäre RFID-Tag und das zusätzliche RFID-Tag in unterschiedlichen Fragmenten der Karte befinden.

5. Kontaktlose Chipkarte nach Anspruch 1, wobei sie mindestens ein Fragment aufweist, das keine RFID-Tags umfasst, und diese Fragment ist das Fragment dass einen Bereich des Bypass-Schaltung des zusätzlichen RFID-Tags oder Bereiche beider Bypass-Schaltung durchquert.

6. Kontaktlose Chipkarte nach Anspruch 1, wobei sich das primäre RFID-Tag und das zusätzliche RFID-Tag innerhalb eines der Fragmente der Karte befinden.

7. Kontaktlose Chipkarte nach Anspruch 1, wobei die mindestens eine Linie zum Trennen der Karte in Fragmente als Rissbildung oder Bruch oder Riss oder Schnitt oder Kerbe oder Perforation oder Dickenvariation, Linien oder Materialschnittstellenlinien der Karte konfiguriert ist Grenzflächenlinien von Materialien oder Grenzlinien von Strukturmaterialien oder inneren Hohlräumen oder Grenzlinien zwischen Kontaktschichten, wobei die Struktur der Karte eine Trennung ihrer Fragmente entlang der festen Linie mit einer akzeptablen Genauigkeit ermöglicht.

8. Kontaktlose Chipkarte nach Anspruch 1, wobei mindestens ein Fragment der Karte mit einer oder mehreren strukturellen Komponenten konfiguriert ist, die zu einem benachbarten Fragment vorstehen und mindestens einen elektrischen Leiter des Bypass-Schaltung des zusätzlichen RFID-Tags umgeben, oder untrennbar damit verbunden sind wobei der Leiter zum Brechen des Leiters als Reaktion auf die Trennung der Fragmente ausgelegt ist, wobei die Bereiche des elektrischen Leiters durch zwei benachbarte Fragmente der Karte entlang der Linie zum Trennen der Karte in Fragmente verlaufen.

9. Kontaktlose Chipkarte nach Anspruch 1, **dadurch gekennzeichnet, dass** die Kartenfragmente in Form von miteinander verbundenen Kartenschichten ausgeführt und schichtweise trennbar sind, wobei Abschnitte eines oder mehrerer elektrischer Leiter der Bypass-Schaltung des zusätzlichen RFID-Tags in zwei oder mehr Kartenschichten ausgeführt sind.

10. Kontaktlose Identifikations-Chipkarte nach Anspruch 1, umfassend: Kartenfragmentierungslinien und mindestens zwei zusätzlichen RFID-Tags.

11. Kontaktlose Chipkarte nach Anspruch 10, **dadurch gekennzeichnet, dass** die Antenne des primären RFID-Tags durch zwei benachbarte Kartenfragmente hindurchgeht, so dass sich die Antenne im normalen, ungeteilten Zustand der Karte in einem Zustand des funktionsfähigen Kontakts befindet und im geteilten Zustand der benachbarten Fragmente sich die Antenne in einem Zustand des unterbrochenen Kontakts befindet, wobei der primäre RFID-Tag, sobald er sich in Reichweite eines funktionierenden RFID-Lesegeräts befindet, kein Rückfunksignal mit ausreichender Leistung erzeugt, um von dem Lesegerät aufgenommen zu werden, und der primäre RFID-Tag funktionsunfähig wird.

12. Kontaktlose Chipkarte nach Anspruch 10, **dadurch gekennzeichnet, dass** der primäre RFID-Tag mindestens eine Bypass-Schaltung aufweist, die einen elektrischen Leiter umfasst und in Kontakt mit den Deaktivierungspins der integrierten Schaltung des primären RFID-Tags steht, und Abschnitte dieser Bypass-Schaltung durch zwei benachbarte Kartenfragmente hindurchgehen und so strukturell mit der Karte verbunden sind, dass in einem normalen, ungeteilten Zustand der Karte diese Bypass-Schaltung im Zustand des funktionsfähigen Kontakts ist, und im geteilten Zustand dieser benachbarten Kartenfragmente diese Bypass-Schaltung im Zustand des unterbrochenen Kontakts ist, wobei der primäre RFID-Tag aktiv ist, wenn die Bypass-Schaltung des primäre RFID-Tags geschlossen ist, und inaktiv ist, wenn diese Bypass-Schaltung unterbrochen ist.

13. Kontaktlose Chipkarte nach Anspruch 10, **dadurch gekennzeichnet, dass** ein Kartenfragment der primäre RFID-Tag enthält und keine zusätzlichen RFID-Tags enthält.

14. Kontaktlose Chipkarte nach Anspruch 10, **dadurch gekennzeichnet, dass** die Chipkarte mindestens ein Fragment aufweist, das keine RFID-Tags enthält und durch das ein Teil einer Bypass-Schaltung oder Teile mehrerer Bypass-Schaltungen der zusätzlichen RFID-Tags hindurchgehen.

15. Kontaktlose Chipkarte nach Anspruch 10, **dadurch gekennzeichnet, dass** sich der primäre RFID-Tag und ein der zusätzlichen RFID-Tags innerhalb eines der Kartenfragmente befinden.

16. Kontaktlose Chipkarte nach Anspruch 10, **dadurch gekennzeichnet, dass** die Linien zur Fragmentierung der Karte in Form von Auf- oder Anbrüche, Risse, Schnitte, Kerbe, Perforation, Änderung in der Kartendicke, Grenzen von Materialien, Grenzen von Strukturelementen, inneren Hohlräume oder Schichtberührungslinien ausgeführt sind, wobei das Kartendesign die Fragmentierung entlang einer vereinbarten Linie mit einer angemessenen Genauigkeit ermöglicht.

17. Kontaktlose Chipkarte nach Anspruch 10, **dadurch gekennzeichnet, dass** mindestens ein Kartenfragment ein oder mehrere Bauteile enthält, die in Richtung des benachbarten Fragments vorstehen und mindestens einen der elektrischen Leiter der Bypass-Schaltungen des zusätzlichen RFID-Tags umschließen oder untrennbar mit diesem Leiter verbunden und so gestaltet sind, dass sie diesen Leiter unterbrechen, wenn die Fragmente getrennt werden, wobei Abschnitte dieses elektrischen Leiters durch zwei benachbarte Kartenfragmente entlang der Linie der Kartenfragmentierung hindurchgehen;

18. Kontaktlose Chipkarte nach Anspruch 10, **dadurch gekennzeichnet, dass** die Kartenfragmente in Form von miteinander verbundenen Kartenschichten ausgeführt und schichtweise trennbar sind, wobei Abschnitte eines oder mehrerer elektrischer Leiter der Bypass-Schaltungen der primären und zusätzlichen RFID-Tags in zwei oder mehreren Kartenschichten ausgeführt sind.

## Revendications

1. Carte à puce d'identification sans contact, comprenant: une étiquette RFID primaire à l'état actif, disposée à l'intérieur de la carte à puce comportant au moins une ligne (7) pour séparer la carte en fragments, une étiquette RFID supplémentaire (8) comportant au moins un circuit de dérivation (5) sous la forme d'un conducteur électrique, connecté par contact à une antenne (2) de l'étiquette RFID supplémentaire ou connecté par contact aux bornes d'un microcircuit intégral (4) de l'étiquette RFID supplémentaire, et des régions dudit circuit de dérivation traversant deux fragments adjacents (3, 6, 10, 11) de la carte et étant structurellement connectées à la carte de sorte que lorsque la carte est dans un état ordinaire, entier, ce circuit de dérivation est dans un état de contact de travail, et lorsque lesdits fragments adjacents sont dans un état séparé, le circuit de dérivation est dans un état de contact rompu, dans lequel lorsque le circuit de dérivation de l'étiquette RFID supplémentaire est dans un état de contact de travail, l'étiquette RFID supplémentaire est dans un état inactif, et lorsque ledit circuit de dérivation est dans un état de contact rompu, l'étiquette RFID supplémentaire est dans un état actif comme étiquette RFID supplémentaire.

2. Carte à puce sans contact selon la revendication 1, dans laquelle l'antenne d'une étiquette RFID primaire à l'état actif de l'étiquette traverse deux fragments adjacents de la carte de sorte qu'à l'état ordinaire, entier, l'antenne de l'étiquette RFID primaire se trouve dans un état de contact de travail, et, lorsque lesdits fragments adjacents sont séparés, l'antenne de l'étiquette RFID primaire est dans un état de contact rompu, durant lequel l'étiquette RFID primaire, lorsqu'elle se trouve à portée d'un lecteur RFID actif, ne génère pas un signal radio de retour avec une puissance nécessaire pour que le lecteur le reçoive, et l'étiquette RFID primaire se désactive.

3. Carte à puce sans contact selon la revendication 1, dans laquelle l'étiquette RFID primaire comporte au minimum un circuit de dérivation sous la forme d'un conducteur électrique ou d'une connexion conductrice de courant comprenant au moins un conducteur électrique, connecté par contact aux bornes de désactivation du microcircuit intégré de l'étiquette RFID primaire, et régions dudit circuit de dérivation traversant deux fragments adjacents de la carte et étant structurellement connectées à la carte de sorte que lorsque la carte est dans un état ordinaire, entier, ce circuit de dérivation est dans un état de contact de travail, et lorsque lesdits fragments adjacents sont dans un état séparé, le circuit de dérivation est dans un état de contact rompu, l'étiquette RFID primaire étant configurée dans un état actif lorsque le circuit de dérivation de l'étiquette RFID primaire est dans un état de contact de travail,et est dans un état inactif lorsque ledit circuit de dérivation est dans un état de contact rompu.

4. Carte à puce sans contact selon la revendication 1, dans laquelle l'étiquette RFID primaire active et l'étiquette RFID supplémentaire sont situées dans des fragments différents de la carte.

5. Carte à puce sans contact selon la revendication 1, dans laquelle elle comporte au moins un fragment ne comprenant pas d'étiquette RFID et il est le fragment traversé par une région du circuit de dérivation de l'étiquette RFID supplémentaire, ou des régions des tous le deux circuits de dérivation.

6. Carte à puce sans contact selon la revendication 1, dans laquelle l'étiquette RFID primaire et l'étiquette RFID supplémentaire sont situées à l'intérieur d'un des fragments de la carte.

7. Carte à puce sans contact selon la revendication 1, dans laquelle l'au moins une ligne de séparation de la carte en fragments est configurée comme une fissuration ou une fracture de la carte, ou une déchirure, ou une coupure, ou une entaille, ou une perforation, ou une variation d'épaisseur, des lignes, ou lignes d'interface matériaux, ou lignes d'interface matériaux structuraux, ou cavités internes, ou lignes limites entre couches en contact, la structure de la carte permettant de séparer ses fragments le long de la ligne fixe avec une précision acceptable.

8. Carte à puce sans contact selon la revendication 1, dans laquelle au moins un fragment de la carte est configuré avec un ou plusieurs composants structurels faisant saillie vers un fragment adjacent et entourant au moins un conducteur électrique du circuit de dérivation de l'étiquette RFID supplémentaire, ou couplé de manière indissociable à ledit conducteur et conçu pour rompre le conducteur en réponse à la séparation des fragments, les régions du conducteur électrique traversant deux fragments adjacents de la carte le long de la ligne de séparation de la carte en fragments.

9. Carte à puce sans contact selon la revendication 1, dans laquelle les fragments de la carte sont configurés comme les couches de la carte couplées les unes aux autres de telle sorte que les fragments peuvent être séparés couche par couche, au moins un conducteur électrique du circuit de dérivation de l'étiquette RFID supplémentaire ayant des régions configurées dans deux ou plusieurs couches de la carte.

10. Carte à puce d'identification sans contact selon la revendication 1, comprenant : des lignes de séparation de la carte en fragments, et au moins deux étiquettes RFID supplémentaires.

11. Carte à puce sans contact selon la revendication 10, dans laquelle l'antenne de l'étiquette RFID primaire traverse deux fragments adjacents de la carte de sorte qu'à l'état ordinaire, entier, l'antenne est dans un état de contact de travail, et, lorsque ledit des fragments sont séparés, l'antenne est dans un état de contact rompu, durant lequel le tag RFID primaire, lorsqu'il se trouve à portée d'un lecteur RFID actif, ne génère pas de signal radio de retour avec une puissance nécessaire pour que le lecteur le reçoive, et l'étiquette RFID principale sort de l'action.

12. Carte à puce sans contact selon la revendication 10, dans laquelle l'étiquette RFID primaire a au moins un circuit de dérivation sous la forme d'un conducteur électrique, connecté par contact aux bornes de désactivation du microcircuit intégral de l'étiquette RFID primaire, et des régions dudit circuit de dérivation traversant deux fragments adjacents de la carte et étant structurellement connectés à la carte de sorte que lorsque la carte est dans un état ordinaire, entier, ce circuit de dérivation est dans un état de contact de travail, et lorsque lesdits fragments adjacents sont dans un état séparé, le circuit de dérivation est dans un état de contact rompu, l'étiquette RFID primaire étant configurée dans un état actif lorsque le circuit de dérivation de l'étiquette RFID primaire est dans un état de contact de travail, et est dans un état inactif lorsque ledit circuit de dérivation est dans un état de contact rompu.

13. Carte à puce sans contact selon la revendication 10, dans laquelle un fragment de la carte comprend l'étiquette RFID principale et ne comprend aucune étiquette RFID supplémentaire.

14. Carte à puce sans contact selon la revendication 10, dans laquelle elle comporte au moins un fragment ne comprenant pas d'étiquettes RFID, traversé par une région d'un circuit de dérivation ou des régions de plusieurs circuits de dérivation parmi les circuits de dérivation des étiquettes RFID supplémentaires.

15. Carte à puce sans contact selon la revendication 10, dans laquelle l'étiquette RFID principale et l'une des étiquettes RFID supplémentaires sont situées dans l'un des fragments de la carte.

16. Carte à puce sans contact selon la revendication 10, dans laquelle les lignes de séparation de la carte en fragments sont configurées en tant que fissuration ou fracture de la carte, ou déchirure, ou coupure, ou entaille, ou perforation, ou variation d'épaisseur, lignes, ou lignes d'interface de matériaux, ou lignes d'interface de matériaux structuraux, ou cavités internes, ou lignes limites entre couches en contact, la structure de la carte permettant de séparer ses fragments le long de la ligne fixe avec une précision acceptable.

17. Carte à puce sans contact selon la revendication 10, dans laquelle au moins un fragment de la carte est configuré avec un ou plusieurs composants structurels faisant saillie vers un fragment adjacent et entourant au moins l'un des conducteurs électriques des circuits de dérivation d'étiquettes RFID supplémentaires, ou indissociablement couplé audit conducteur, et conçu pour rompre le conducteur en réponse à la séparation des fragments, les régions du conducteur électrique traversant deux fragments adjacents de la carte le long de la ligne de séparation de la carte en fragments ;

18. Carte à puce sans contact selon la revendication 10, dans laquelle les fragments de la carte sont configurés comme les couches de la carte couplées les unes aux autres de telle sorte que les fragments peuvent être séparés couche par couche, un ou plusieurs conducteurs électriques des circuits de dérivation des étiquettes RFID primaires et supplémentaires, ayant des régions configurées dans deux ou plusieurs couches de la carte.
